Europäisches Patentamt

European Patent Office

Office européen des brevets

(19)

(11) Numéro de publication : **0 088 006**
**B1**

(12) **FASCICULE DE BREVET EUROPÉEN**

(45) Date de publication du fascicule du brevet :
12.02.86

(21) Numéro de dépôt : **83400337.8**

(22) Date de dépôt : **17.02.83**

(51) Int. Cl.⁴ : **C 01 G 51/08, C 01 G 21/16,
C 01 G 43/06**

(54) **Procédé de préparation de produits poreux à base de fluorure de cobalt ou de fluorure de plomb.**

(30) Priorité : **24.02.82 FR 8203020**

(43) Date de publication de la demande :
**07.09.83 Bulletin 83/36**

(45) Mention de la délivrance du brevet :
**12.02.86 Bulletin 86/07**

(84) Etats contractants désignés :
**BE DE GB NL**

(56) Documents cités :
**FR-A- 2 111 730
GMELINS HANDBUCH DER ANORGANISCHEN CHE-
MIE, Blei, Teil C, Lieferung 1, no. 47, 1969, pages 273-
278, Verlag Chemie GmbH, Weinheim, DE
Traité de Chimie Minérale, Paul Pascal, Tome XVII
(1963), page 213**

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Bergez, Pierre
32 rue Dareau
F-75014 Paris (FR)**
Inventeur : **Deguelte, Alain
9 rue de la Convention
F-93260 Les Lilas (FR)**
Inventeur : **Seigneurin, Laurent
3 av. du Parc
F-30340 Salindres (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention a pour objet un procédé de préparation de produits poreux à base de fluorure de cobalt ou de fluorure de plomb.

De façon plus précise, elle concerne la préparation de produits contenant du fluorure de plomb ou du fluorure de cobalt sous forme de poudre ayant une surface spécifique élevée, utilisables notamment comme agents de sorption pour la purification de gaz.

Dans le cas des produits à base de fluorure de cobalt, ceux-ci peuvent être utilisés en particulier pour la purification d'hexafluorure d'uranium contenant des traces d'hexafluorure de plutonium et d'hexafluorure de neptunium.

En effet, le fluorure de cobalt présente la propriété de réduire, à des températures de 93 à 230 °C l'hexafluorure de neptunium et l'hexafluorure de plutonium en tétrafluorures solides qui sont retenus par le produit poreux à base de fluorure de cobalt. Un procédé de ce type est décrit dans les demandes de brevet françaises publiées n° 2 034 805 et 2 111 730. Pour cette utilisation, la capacité de traitement du fluorure de cobalt dépend en particulier de la surface spécifique de la poudre de fluorure de cobalt utilisée et cette capacité de traitement augmente avec la surface spécifique du produit. Aussi, il est d'un grand intérêt de disposer de poudres ayant une surface spécifique élevée.

La présente invention a précisément pour objet un procédé de préparation de produits poreux contenant du fluorure de cobalt ou du fluorure de plomb présentant une surface spécifique élevée.

Ce procédé consiste à décomposer thermiquement du fluosilicate de plomb ou du fluosilicate de cobalt.

Lors de cette décomposition thermique, le fluosilicate de plomb ($PbSiF_6$, $4H_2O$) ou le fluosilicate de cobalt ($CoSiF_6$, $6H_2O$) se décomposent en produit solide (fluorure de plomb ou fluorure de cobalt) et en gaz constitués par du tétrafluorure de silicium et de la vapeur d'eau. Le départ de matière sous forme de produits gazeux ($SiF_4$ et $H_2O$) crée des vides répartis dans tout le solide résiduel. Si l'on opère à une température suffisamment basse, on peut converser en grande partie, la porosité créée par le départ de ces produits gazeux.

En revanche, si l'on réalise la décomposition thermique à une température élevée, il se produit ensuite un frittage de la poudre de fluorure obtenu, ce qui conduit à une perte de porosité.

Aussi, la température utilisée pour réaliser la décomposition thermique du fluosilicate de plomb ou de cobalt joue un rôle très important. Dans le cas du fluosilicate de cobalt, la température de décomposition thermique est avantageusement de 200 à 600 °C. Dans le cas du fluosilicate de plomb, la température de décomposition thermique est avantageusement de 200 à 270 °C. En effet, dans ce dernier cas, il est nécessaire d'opérer à une température plus basse car le fluorure de plomb ayant une frittabilité plus importante que celle du fluorure de cobalt, on obtient dès 270 °C un début de frittage du produit obtenu.

Le procédé selon l'invention peut être utilisé pour préparer directement des poudres ou encore pour préparer des billes chargées de fluorure de plomb ou de cobalt.

Selon un premier mode de réalisation du procédé de l'invention, on prépare directement une poudre de fluorure de cobalt ou une poudre de fluorure de plomb. Pour la préparation d'une poudre de fluorure de cobalt, on décompose des cristaux de fluosilicate de cobalt à une température de 200 à 600 °C, ceci permet d'obtenir une poudre dont la surface spécifique peut varier de 120 à 10 $m^2/g$ selon la température choisie.

Pour la préparation d'une poudre de fluorure de plomb, on décompose des cristaux fluosilicate de plomb à une température de 200 à 270 °C, ce qui permet d'obtenir une poudre de fluorure de plomb dont la surface spécifique peut varier de 4 à 1 $m^2/g$, c'est-à-dire 33 à 8,24 $m^2/cm^3$, selon la température utilisée.

Aussi, dans les deux cas, on peut contrôler la surface spécifique de la poudre obtenue en choisissant de façon appropriée la température de décomposition thermique. Dans les deux cas, on réalise de préférence la décomposition thermique sous vide ou sous atmosphère de gaz inerte pour éviter une pyrohydrolyse des fluorures obtenus par l'eau de décomposition.

Selon un second mode de réalisation du procédé de l'invention, on prépare des produits poreux constitués par des billes-supports chargées de fluorure de cobalt ou de fluorure de plomb.

Dans ce cas, le procédé consiste à imprégner des billes-supports en matériau poreux d'une solution de fluosilicate de plomb ou d'une solution de fluosilicate de cobalt, puis à soumettre les billes ainsi imprégnées à un traitement thermique effectué à une température de 200 à 600 °C dans le cas du fluosilicate de cobalt, et à une température de 200 à 270 °C dans le cas du fluosilicate de plomb.

Ainsi, on décompose directement le fluosilicate de plomb ou de cobalt sur les billes-supports, ce qui conduit à la formation « in situ » de fluorure de plomb ou de cobalt ayant une surface spécifique élevée.

Dans le cas de la préparation de billes chargées de fluorure de cobalt, on peut ensuite soumettre les billes chargées de fluorure de cobalt ainsi obtenues à un traitement thermique complémentaire réalisé sous vide ou sous atmosphère de gaz inerte afin de réduire la surface spécifique du fluorure de cobalt formé et l'ajuster ainsi à une valeur plus faible, ce qui est quelquefois préférable. En effet, le fluorure de cobalt de grande surface spécifique adsorbe physiquement une grande quantité d'eau qu'il est difficile ou même impossible d'éliminer complètement dans les conditions d'emploi (réacteur). On rappelle que cette

2

élimination d'eau est nécessaire pour éviter les réactions d'hydrolyse des fluorures de neptunium et de plutonium avec formation, en surface, des oxydes correspondants, qui peuvent faire perdre aux fluorures de cobalt et de plomb leurs propriétés réductrices.

Le matériau qui constitue les billes-supports est un matériau poreux, résistant mécaniquement, qui a une porosité appropriée, par exemple, un rayon moyen de pores de 0,1 à environ 20 μm. Ce matériau est choisi, par ailleurs, en fonction de l'utilisation des billes obtenues. Ainsi, lorsque les billes chargées de fluorure de cobalt sont destinées au traitement d'hexafluorure d'uranium, ce matériau doit rester stable chimiquement en présence d'hexafluorure d'uranium.

A titre d'exemple de matériaux poreux susceptibles d'être utilisés dans ce cas, on peut citer les billes d'alumine α ou corindon ayant un rayon moyen de pore de 0,1 à environ 20 μm.

Le fluosilicate de cobalt $CoSiF_6$, $6H_2O$ utilisé comme produit de départ dans le procédé de l'invention, peut être obtenu en faisant réagir de l'acide fluosilicique $H_2SiF_6$ sur du cobalt ou sur un sel de cobalt tel que le nitrate de cobalt, l'acétate de cobalt ou le carbonate de cobalt.

Lorsqu'on utilise un sel de cobalt, on dissout celui-ci dans un solvant approprié, par exemple, dans de l'acétone et on ajoute à la solution de sel de cobalt une solution d'acide fluosilicique en léger excès par rapport à la quantité stœchiométrique afin de transformer complètement le sel de cobalt en fluosilicate de cobalt.

Lorsqu'on opère dans un solvant tel que l'acétone, le fluosilicate de cobalt formé précipite sous la forme de cristaux qui peuvent être séparés aisément de la solution par filtration, puis lavés et séchés. Lorsque le fluosilicate de cobalt formé est soluble dans la solution, on évapore cette dernière pour obtenir les cristaux de fluosilicate de cobalt.

Les cristaux de fluosilicate de cobalt ainsi obtenus peuvent être utilisés directement pour la préparation de poudre de fluorure de cobalt.

Lorsque le fluosilicate de cobalt ainsi obtenu est destiné à la préparation de billes chargées de fluorure de cobalt, on dissout les cristaux dans un solvant approprié, par exemple, dans de l'eau.

Le fluosilicate de plomb utilisé comme produit de départ dans le procédé de l'invention peut être obtenu en faisant réagir de l'acide fluosilicique sur de l'oxyde de plomb ou sur un sel de plomb constitué par du nitrate, de l'acétate, du carbonate ou du sulfate de plomb. Comme dans le cas du fluosilicate de cobalt, on utilise un léger excès d'acide fluosilicique afin de transformer complètement l'oxyde ou le sel de plomb en fluosilicate de plomb. Lorsque le fluosilicate de plomb obtenu doit être utilisé pour la préparation de poudres, on concentre la solution par évaporation pour obtenir des cristaux solides de $PbSiF_6$, $4H_2O$ que l'on sèche ensuite.

Dans le cas où le fluosilicate de plomb est destiné à la préparation de billes chargées de fluorure de plomb, on peut utiliser directement pour l'imprégnation, la solution obtenue en faisant réagir de l'oxyde de plomb avec une solution aqueuse d'acide fluosilicique.

Les poudres de fluorure de plomb ou de cobalt obtenues par le procédé de l'invention peuvent être utilisées pour la préparation d'éléments catalytiques composites comportant une couche active fine à base de fluorure de plomb ou de cobalt et une couche macroporeuse inerte aux agents fluorants, servant de substrat et assurant la résistance mécanique.

Le procédé de préparation de tels éléments composites consiste à préparer une poudre de fluorure de plomb ayant une surface spécifique de 1 à 4 m²/g ou une poudre de fluorure de cobalt ayant une surface spécifique de 10 à 120 m²/g, à déposer sur un support macroporeux. La poudre ainsi obtenue, à comprimer le support revêtu et à le soumettre à un traitement thermique effectué sous vide ou sous atmosphère inerte à une température inférieure à 270 °C dans le cas du fluorure de plomb ou à une température inférieure à 600 °C dans le cas du fluorure de cobalt.

Avantageusement, le support macroporeux est constitué par un tube cylindrique creux en alumine alpha ou en nickel fritté. De préférence, le tube a une grande perméabilité, une porosité importante, une bonne résistance mécanique et un état de surface interne ou externe suffisamment lisse pour permettre un dépôt homogène et mince de la poudre de fluorure de plomb ou de la poudre de fluorure de cobalt.

Le dépôt de la poudre sur le support peut être réalisé par des méthodes classiques d'enduction telles que celles décrites dans FR-A-2 150 390 et 2 250 633.

Selon FR-A-2 150 390, l'enduction est réalisée en faisant filtrer à travers les parois poreuses du support une suspension aqueuse contenant des particules du produit déposé. Selon l'invention, lorsqu'on réalise le dépôt de la poudre de fluorure de plomb ou de fluorure de cobalt sur le support macroporeux par cette méthode de filtration, on utilise des suspensions non aqueuses de fluorure de cobalt ou de fluorure de plomb, en raison de la solubilité du fluorure de cobalt ou de plomb, par exemple des suspensions de fluorure dans un solvant organique tel qu'un alcool, l'acétone, l'éthyl-glycol, le cyclohexane ou le méthylcyclohexane.

Selon FR-A-2 250 633, on réalise l'enduction, soit par tassement d'une poudre entre le support poreux et une paroi auxiliaire, soit par électrophorèse, soit par centrifugation d'une suspension. Selon l'invention, on peut utiliser également ces différentes méthodes pour déposer sur le support macroporeux de la poudre de fluorure de plomb ou de la poudre de fluorure de cobalt.

Après cette étape d'enduction du support macroporeux, on comprime le support revêtu, de préférence par compression isostatique, en utilisant par exemple une membrane souple ou un intercalaire pour éviter le collage comme cela est décrit dans FR-A-2 150 390 et 2 250 633.

3

Après cette étape de compression du support revêtu, on réalise un traitement thermique, de préférence en atmosphère inerte, à une température de préférence inférieure à 500 °C lorsque la poudre déposée est du fluorure de cobalt, ou à une température de préférence inférieure à 250 °C lorsque la poudre déposée est du fluorure de plomb.

D'autres caractéristiques et avantages de l'invention apparaîtront mieux à la lecture des exemples suivants donnés bien entendu à titre illustratif et non limitatif.

Exemple 1 — Préparation de poudre de fluorure de cobalt.

On dissout 2 900 g (10 moles) de nitrate de cobalt $Co(NO_3)_2$, $6H_2O$ dans 10 litres d'acétone en agitant pendant 30 minutes. On ajoute ensuite en 45 minutes 4 litres d'une solution d'acide fluosilicique contenant 1 440 g (10 moles) de $H_2SiF_6$ à la solution ainsi obtenue. On agite encore le mélange pendant 15 minutes. On sépare ensuite par filtration les cristaux de fluosilicate de cobalt qui précipitent dans la solution et on essore les cristaux ainsi obtenus. On mélange ensuite les cristaux avec 5 litres d'acétone, puis on filtre, on essore et on sèche à l'air libre à la température ambiante, en couche mince. On obtient ainsi 2 740 g (8,88 moles) de fluosilicate de cobalt $CoSiF_6$, $6H_2O$ que l'on identifie par diffraction aux rayons X.

On décompose ensuite les 2 740 g de fluosilicate de cobalt ainsi obtenu, dans une étuve à la température de 220 °C et sous pression réduite égale à 3 333 Pa (25 mm de mercure). On dispose le fluosilicate dans un plat en monel de manière à avoir une couche d'environ 25 mm d'épaisseur. On monte à 225 °C en une heure 30 et on laisse pendant deux heures à 220 °C. On met ensuite rapidement la poudre de $CoF_2$ ainsi obtenue dans un flacon étanche. Le poids de poudre de fluorure de cobalt obtenu est de 880 g et sa surface spécifique BET est de 102 m²/g.

Exemple 2 — Préparation de billes d'alumine imprégnées de fluorure de cobalt

On dissout dans 2,5 litres d'acétone 725 g (2,5 moles) de $Co(NO_3)_2$, $6H_2O$, sous agitation, pendant 30 minutes. On ajoute ensuite en 30 minutes un litre de solution d'acide fluosilicique contenant 360 g de $H_2SiF_6$ (2,5 moles). On agite encore pendant 15 minutes, puis on filtre et on essore. On lave ensuite le produit obtenu avec 1,5 litre d'acétone et on sèche à l'air libre à une température de 25 °C. On obtient ainsi 685 g de fluosilicate de cobalt $CoSiF_6$, $6H_2O$. On agite ces 685 g de $CoSiF_6$, $6H_2O$ avec 600 cm³ d'eau distillée pour obtenir une solution saturée à la température ambiante. On immerge dans cette solution 700 g de billes d'alumine calcinées à 1 700 °C, on fait le vide et on réalise l'imprégnation pendant deux heures. On égoutte ensuite les billes, puis on les sèche sous vide à 3 333 Pa (25 mm de mercure) à l'étuve à 100 °C, et on monte ensuite la température en une heure à 220 °C et on les laisse deux heures à cette température pour décomposer $CoSiF_6$ en fluorure de cobalt $CoF_2$.

Le poids des billes imprégnées de $CoF_2$, ainsi obtenues est de 770 g, ce qui correspond à une augmentation de poids de 10 %. La surface spécifique BET des billes est de 10 m²/g.

Exemple 3 — Préparation de poudre de fluorure de plomb.

Dans un bécher en polyéthylène, on met 1 300 cm³ d'une solution d'acide fluosilicique contenant 670 g/l de $H_2SiF_6$ (6 moles). On agite et on ajoute par petites fractions 1 338 g (6 moles) de PbO, et on refroidit un peu pour ne pas dépasser la température de 35 °C. Après l'addition de l'oxyde de plomb PbO, on agite pendant 30 minutes, puis on filtre pour retirer les traces insolubles. On soumet ensuite la solution claire ainsi obtenue à une évaporation sous un vide de 2 000 à 2 666 Pa (15 à 20 mm de mercure), dans un évaporateur rotatif chauffé au bain-marie à 30-35 °C jusqu'au début de la cristallisation. On transvase ensuite dans un plat en couche mince et on laisse sécher pendant 7 jours à l'air libre, à une température de 25 à 30 °C. On obtient ainsi 2 380 g de cristaux secs de $PbSiF_6$, $4H_2O$.

On décompose ensuite ces 2 380 g de cristaux secs de fluosilicate de plomb $PbSiF_6$, $4H_2O$ dans une étuve sous un vide de 133,3 Pa (1 mm de mercure) à 230 °C pendant deux heures dans un plat en Monel avec une épaisseur de couche de 20 mm. On obtient ainsi 1 480 g de fluorure de plomb $PbF_2$ ayant une surface spécifique BET de 3,2 m²/g.

Exemple 4 — Préparation de billes d'alumine imprégnées de fluorure de plomb.

On prépare des billes d'alumine d'un diamètre de 3 à 8 mm de façon suivante. On mélange 60 % d'alumine $CTB_3$ et 40 % d'alumine $LS_{15}$ superbroyée. On ajoute à ce mélange 7 % de sciure de bois et on fabrique les billes au drageoir, puis on les laisse mûrir et on les calcine à 1 700 °C.

On prépare une solution de fluosilicate de plomb en ajoutant par fractions 669 g (3 moles) d'oxyde de plomb PbO dans 650 cm³ d'une solution d'acide fluosilicique contenant 670 g/l de $H_2SiF_6$ (3 moles), sous agitation. On refroidit pour ne pas dépasser 85 °C. On immerge ensuite dans cette solution 700 g des billes d'alumine calcinées à 1 700 °C obtenues précédemment, on fait le vide et on les laisse s'imprégner pendant deux heures. On égoutte ensuite les billes et, après les avoir étalées, on les sèche à l'air libre, à 25 °C, pendant 72 heures.

4

Le poids des billes imprégnées de fluosilicate de plomb est de 968 g.

On décompose ensuite le fluosilicate de plomb des billes dans un four sous vide de 266,6 Pa (2 mm de mercure) en montant la température en trois heures à 250 °C et en maintenant cette température pendant deux heures.

On obtient ainsi 865 g de billes imprégnées de $PbF_2$ avec une augmentation de poids de billes de 165 g soit 23,6 %.

Exemple 5 — Préparation d'un élément composite constitué par un support en nickel revêtu d'une couche microporeuse de fluorure de cobalt.

On prépare une suspension de poudre de fluorure de cobalt en mélangeant au moyen d'un agitateur-broyeur du type à ultrasons, pendant 6 à 10 minutes, un litre de cyclohexane avec 1,76 g de poudre de fluorure de cobalt ayant une surface spécifique de 27 $m^2/g$ obtenue par décomposition thermique de cristaux de fluosilicate de cobalt à une température finale de retraitement de 550 °C. On dépose ensuite sur un support tubulaire en nickel, ayant un diamètre intérieur de 15 mm, une hauteur de 1 m et un diamètre moyen de pores de 2 à 3 μm, la poudre de fluorure de cobalt contenue dans la suspension en filtrant cette suspension au travers du support macroporeux en nickel, ce qui conduit au dépôt d'une couche interne de poudre de $CoF_2$ à 8 mg de $CoF_2/cm^2$ de surface interne du support. Après dépôt de la couche, on sèche le support revêtu à l'étuve pendant 20 minutes à 100 °C, puis on laisse refroidir et on comprime isostatiquement le support revêtu sous une pression de 5 MPa. Puis on recomprime isostatiquement sous une pression de 10 à 20 MPa. On soumet ensuite le support à un traitement thermique sous azote réalisé à une température de 300 °C.

Dans ces conditions, avec une poudre de fluorure de cobalt de 27 $m^2/g$, on obtient pour un dépôt de 8 mg de $CoF_2/cm^2$ de support, un élément ayant un rayon moyen de pores de 150 Å (15 nm) et une perméabilité à l'air de 1 500 · $10^7$ moles d'air/$cm^2$.min.cm de mercure.

Exemple 6 — Utilisation de billes d'alumine chargées de fluorure de cobalt pour la purification de l'hexafluorure d'uranium.

Dans cet exemple, on utilise un réacteur cylindrique ayant un diamètre de 20 mm et une longueur de 150 mm, rempli de billes d'alumine contenant 10 % en poids de fluorure de cobalt, avec une surface spécifique des billes de 2,5 $m^2/g$, ce qui correspond à une surface spécifique d'environ 24 $m^2/g$ pour le fluorure de cobalt. On dispose à chaque extrémité de la colonne de billes, des billes d'alumine pure ayant une surface spécifique d'environ 0,1 $m^2/g$, afin d'obtenir en fonctionnement une température homogène dans toute la colonne de billes d'alumine chargée de fluorure de cobalt.

On soumet tout d'abord les billes chargées de fluorure de cobalt à un traitement de dégazage effectué à 150 °C pendant deux heures sous vide, puis à 150 °C avec balayage d'azote pendant deux heures supplémentaires.

Après ce dégazage, on fait circuler pendant 1 h 50 min. dans le réacteur maintenu à une température de 150 °C, de l'hexafluorure d'uranium contenant de 80 à 110 ppm (parties par million en poids) d'hexafluorure de neptunium, sous une pression de 950 hPa, à un débit de 0,163 g d'uranium par seconde, ce qui correspond à une vitesse superficielle de 8,04 cm/s. On détermine périodiquement la teneur en neptunium du gaz sortant du réacteur par comptage alpha, et en fin d'opération on détermine la quantité de neptunium fixée sur les billes d'alumine chargées de fluorure de cobalt pour déterminer la capacité de traitement.

Les résultats obtenus sont donnés dans le tableau joint où l'on a indiqué les valeurs extrêmes du facteur de décontamination F en neptunium qui est égal au rapport :

$$F = \frac{NpF_6/UF_6 \text{ avant purification}}{NpF_6/UF_6 \text{ après purification}}$$

Sur ce tableau, on a également indiqué la valeur de la capacité de traitement qui correspond à la masse d'hexafluorure d'uranium contenant 1 ppm d'hexafluorure de neptunium susceptible d'être traité par 1 g de fluorure de cobalt afin d'obtenir à la sortie du réacteur de l'hexafluorure d'uranium ne contenant plus de neptunium.

Exemples 7 à 10 — Utilisation d'un élément composite revêtu de $CoF_2$ pour la purification d'hexafluorure d'uranium.

Dans chacun de ces exemples, on utilise un élément composite identique à celui obtenu dans l'exemple 5, qui comprend un tube en nickel fritté recouvert intérieurement d'une couche de fluorure de cobalt ayant une surface spécifique de 27 $m^2 \cdot g^{-1}$. Cet élément est obturé à l'une de ses extrémités de façon à pouvoir introduire l'hexafluorure d'uranium contenant des traces d'hexafluorure de neptunium à l'autre extrémité de l'élément et à forcer le mélange gazeux à traverser la paroi de l'élément composite.

5

Avant utilisation, on a soumis l'élément composite à un traitement de dégazage réalisé pendant deux heures à 150 °C sous balayage d'azote, puis pendant deux heures supplémentaires à 150 °C, sous vide. Ensuite, on introduit l'hexafluorure d'uranium, sous une pression de 900 à 1 000 hPa à l'intérieur de l'élément maintenu à une température de 150 °C. Dans les exemples 7 à 10, on opère avec des débits d'uranium différents et des teneurs en hexafluorure de neptunium différentes. Les teneurs en hexafluorure de neptunium et les débits d'uranium sont donnés dans le tableau joint. Pour les exemples 9 et 10, on fait varier le débit d'hexafluorure d'uranium au cours de l'essai. Ainsi, dans l'exemple 9, on commence avec un débit d'hexafluorure d'uranium de 0,02 g d'uranium par seconde et on augmente ce débit à 0,135 g d'uranium par seconde après 20 min. de fonctionnement.

Dans l'exemple 10, on opère avec un débit d'hexafluorure d'uranium de 0,034 g d'uranium par seconde au début de l'essai et on amène ce débit à 0,135 g d'uranium par seconde au bout de 20 min. de fonctionnement. Les résultats obtenus sont donnés dans le tableau joint.

Au vu de ce tableau, on constate que l'utilisation d'éléments composites permet d'obtenir des facteurs de décontamination élevés.

## Tableau

| Exemples | Support | Teneur en $CoF_2$ | Surface spécifique de $CoF_2$ $(m^2 \cdot g^{-1})$ | Teneur en Np de $UF_6$ (ppm) | Débit de l'$UF_6$ g $U \cdot s^{-1}$ | Facteur de décontamina-tion (F) | Capacité $KgUF_6/g$ de $CoF_2$ |
|---|---|---|---|---|---|---|---|
| 6 | Billes d'alumine α | 10 % | 24 | 80-110 | 0,163 (vit. super-ficielle de 8 cm · $S^{-1}$) | 81 à 22 (1 ppm) | 131 |
| 7 | Tube de nickel | 1,76 g | 27 | 105-109 | 0,135 | 1 170-500 (90 ppb) (*) | > 125 |
| 8 | Tube de nickel | 1,76 g | 27 | 40-50 | 0,135 | 400-130 (10 ppb) | > 125 |
| 9 | Tube de nickel | 1,76 g | 27 | 45-55 | 0,02 \ 0,135 | 600 (71 ppb) \ 600-195 (120 ppb) | > 125 |
| 10 | Tube de nickel | 1,76 g | 27 | 12-13 | 0,034 \ 0,135 | 44 (220 ppb) \ 128-51 (50 ppb) | > 125 |

(*) ppb : parties par milliard

## Revendications

1. Procédé de préparation de produits poreux contenant du fluorure de cobalt $CoF_2$ ou du fluorure de plomb $PbF_2$, caractérisé en ce qu'il consiste à décomposer thermiquement du fluosilicate de plomb ou du fluosilicate de cobalt.

2. Procédé selon la revendication 1, de préparation d'une poudre de fluorure de cobalt ayant une surface spécifique de 10 à 120 m²/g, caractérisé en ce qu'il consiste à décomposer des cristaux de fluosilicate de cobalt à une température de 200 à 600 °C.

3. Procédé selon la revendication 1, de préparation de billes support chargées de fluorure de cobalt, caractérisé en ce qu'il consiste à imprégner des billes support en matériau poreux d'une solution de fluosilicate de cobalt et à soumettre les billes ainsi imprégnées à un traitement thermique effectué à une température de 200 à 600 °C pour décomposer le fluosilicate de cobalt en fluorure de cobalt.

4. Procédé selon l'une quelconque des revendications 2 et 3, caractérisé en ce que l'on prépare le fluosilicate de cobalt en faisant réagir de l'acide fluosilicique sur un sel de cobalt.

5. Procédé selon la revendication 4, caractérisé en ce que le sel de cobalt est le nitrate de cobalt, l'acétate de cobalt ou le carbonate de cobalt.

6. Procédé selon la revendication 1 de préparation d'une poudre de fluorure de plomb ayant une surface spécifique de 1 à 4 m²/g, caractérisé en ce qu'il consiste à décomposer du fluosilicate de plomb à une température de 200 à 270 °C.

6

7. Procédé selon la revendication 1, de préparation de billes-supports chargées de fluorure de plomb, caractérisé en ce qu'il consiste à imprégner des billes-supports en matériau poreux d'une solution de fluosilicate de plomb et à soumettre les billes ainsi imprégnées à un traitement thermique effectué à une température de 200 à 270 °C pour décomposer le fluosilicate de plomb en fluorure de plomb.

8. Procédé selon l'une quelconque des revendications 6 et 7, caractérisé en ce que l'on prépare le fluosilicate de plomb en faisant réagir de l'oxyde, du nitrate, de l'acétate, du carbonate ou du sulfate de plomb sur de l'acide fluosilicique.

9. Procédé selon l'une quelconque des revendications 3 à 5, 7 et 8, caractérisé en ce que les billes sont des billes poreuses en alumine ayant un rayon moyen de pores de 0,1 à 20 μm.

10. Procédé de préparation d'éléments composites comportant une couche active de fluorure de plomb, caractérisé en ce qu'il consiste à préparer une poudre de fluorure de plomb ayant une surface spécifique de 1 à 4 m²/g par le procédé selon la revendication 6, à déposer sur un support macroporeux la poudre ainsi obtenue, à comprimer le support revêtu et à le soumettre à un traitement thermique effectué sous vide ou sous atmosphère inerte à une température inférieure à 270 °C.

11. Procédé de préparation d'éléments composites comportant une couche active de fluorure de cobalt, caractérisé en ce qu'il consiste à préparer une poudre de fluorure de cobalt ayant une surface spécifique de 10 à 120 m²/g par le procédé selon la revendication 2, à déposer sur un support macroporeux la poudre ainsi obtenue, à comprimer le support revêtu et à le soumettre à un traitement thermique effectué sous vide ou sous atmosphère inerte à une température inférieure à 600 °C.

12. Procédé selon l'une quelconque des revendications 10 et 11, caractérisé en ce que le support macroporeux est constitué par un tube creux en alumine ou en nickel fritté.

13. Procédé selon l'une quelconque des revendications 10 à 12, caractérisé en ce que l'on dépose la poudre de fluorure de plomb ou la poudre de fluorure de cobalt sur le support en filtrant au travers dudit support une suspension de ladite poudre dans un solvant organique.

## Claims

1. Process for the preparation of porous products containing cobalt fluoride $CoF_2$, or lead fluoride $PbF_2$, characterized in that it consists in thermal decomposition of lead silicofluoride or cobalt silicofluoride.

2. Process according to Claim 1, for the preparation of a cobalt fluoride powder having a specific surface of 10 to 120 m²/g, characterized in that it consists in decomposing crystals of cobalt silicofluoride at a temperature of 200 to 600 °C.

3. Process according to Claim 1, for the preparation of support grains loaded with cobalt fluoride, characterized in that it consists in impregnating support grains of a porous material with a solution of cobalt silicofluoride, and in subjecting the grains thereby impregnated to a heat treatment at a temperature of 200 to 600 °C to decompose the cobalt silicofluoride into cobalt fluoride.

4. Process according to either of Claims 2 and 3, characterized in that the cobalt silicofluoride is produced by reacting fluorosilicic acid with a cobalt salt.

5. Process according to Claim 4, characterized in that the cobalt salt is cobalt nitrate, cobalt acetate or cobalt carbonate.

6. Process according to Claim 1, for the preparation of a powder of lead fluoride having a specific surface of 1 to 4 m²/g, characterized in that it consists in decomposing lead silicofluoride at a temperature of 200 to 270 °C.

7. Process according to Claim 1, for the preparation of support grains loaded with lead fluoride, characterized in that it consists in impregnating support grains of a porous material with a solution of lead silicofluoride and in subjecting the grains thereby impregnated to heat treatment carried out a temperature of 200 to 270 °C to decompose the lead silicofluoride into lead fluoride.

8. Process according to either of Claims 6 and 7, characterized in that the lead silicofluoride is prepared by reacting fluorosilicic acid with lead oxide, nitrate, acetate, carbonate or sulfate.

9. Process according to any one of Claims 3 to 5, 7 and 8, characterized in that the grains are porous alumina grains having an average pore size 0.1 to 20 μm.

10. Process for the production of composite elements comprising an active layer of lead fluoride, characterized in that it consists in preparing a lead fluoride powder having a specific surface of 1 to 4 m²/g by the process according to Claim 6, depositing the powder thereby obtained on a macroporous support, compressing the coated support and subjecting it to heat treatment under vacuum or in an inert atmosphere at a temperature of below 270 °C.

11. Process for the preparation of composite elements comprising an active layer of cobalt fluoride, characterized in that it consists in preparing a cobalt fluoride powder having a specific surface of 10 to 120 m²/g by the process according to Claim 2, depositing the powder thus obtained on a macroporous support, compressing the coated support and subjecting it to a heat treatment effected under vacuum or in an inert atmosphere at a temperature below 600 °C.

12. Process according to either of Claims 10 and 11, characterized in that the macroporous support is a hollow tube of alumina or of sintered nickel.

13. Process according to any one of Claims 10 to 12, characterized in that the powder of lead fluoride or the powder of cobalt fluoride is deposited on the support by filtering a suspension of said powder in an organic solvent through said support.

**Patentansprüche**

1. Verfahren zur Herstellung von porösen Produkten, die Kobaltfluorid $CoF_2$ oder Bleifluorid $PbF_2$ enthalten, dadurch gekennzeichnet, daß es darin besteht, durch Wärme Bleifluorsilikat oder Kobaltfluorsilikat zu zersetzen.

2. Verfahren nach Anspruch 1 zur Herstellung eines Kobaltfluoridpulvers mit einer spezifischen Oberfläche von 10 bis 120 $m^2/g$, dadurch gekennzeichnet, daß es darin besteht, daß Kobaltfluorsilikatkristalle bei einer Temperatur von 200 bis 600 °C zersetzt werden.

3. Verfahren nach Anspruch 1 zur Herstellung von mit Kobaltfluorid beladenen Trägerkugeln, dadurch gekennzeichnet, daß es darin besteht, die Trägerkugeln aus porösem Material mit einer Kobaltfluorsilikatlösung zu tränken und die derart getränkten Kugeln einer bei einer Temperatur von 200 bis 600 °C durchgeführten Wärmebehandlung auszusetzen, um das Kobaltfluorsilikat in Kobaltfluorid zu zersetzen.

4. Verfahren nach Anspruch 2 oder 3, dadurch gekennzeichnet, daß man das Kobaltfluorsilikat herstellt, indem man Fluorkieselsäure mit einem Kobaltsalz reagieren läßt.

5. Verfahren nach Anspruch 4, dadurch gekennzeichnet, daß das Kobaltsalz Kobaltnitrat, Kobaltacetat oder Kobaltkarbonat ist.

6. Verfahren nach Anspruch 1 zur Herstellung eines Bleifluoridpulvers mit einer spezifischen Oberfläche von 1 bis 4 $m^2/g$, dadurch gekennzeichnet, daß es darin besteht, Bleifluorsilikat bei einer Temperatur von 200 bis 270 °C zu zersetzen.

7. Verfahren nach Anspruch 1 zur Herstellung von mit Bleifluorid beladenen Trägerkugeln, dadurch gekennzeichnet, daß es darin besteht, Trägerkugeln aus porösem Material in einer Bleifluorsilikatlösung zu tränken und die derart getränkten Kugeln einer bei einer Temperatur von 200 bis 270 °C durchgeführten Wärmebehandlung auszusetzen, um das Bleifluorsilikat in Bleifluorid umzuwandeln.

8. Verfahren nach Anspruch 6 oder 7, dadurch gekennzeichnet, daß man das Bleifluorsilikat herstellt, indem man ein Oxyd, das Nitrat, das Acetat, das Karbonat oder das Sulfat des Bleis mit Fluorkieselsäure reagieren läßt.

9. Verfahren nach einem der Ansprüche 3 bis 5, 7 oder 8, dadurch gekennzeichnet, daß die Kugeln poröse Kugeln aus Aluminiumoxyd mit einem mittleren Porendurchmesser von 0,1 bis 20 µm sind.

10. Verfahren zum Herstellen von zusammengesetzten Elementen, die eine aktive Schicht aus Bleifluorid aufweisen, dadurch gekennzeichnet, daß es darin besteht, ein Bleifluoridpulver mit einer spezifischen Oberfläche von 1 bis 4 $m^2/g$ mit dem Verfahren nach Anspruch 6 herzustellen, das derart erhaltene Pulver auf einen makroporösen Träger aufzubringen, den überzogenen Träger zusammenzudrücken und einer Wärmebehandlung auszusetzen, die im Vakuum oder in einer inerten Atmosphäre bei einer Temperatur unterhalb von 270 °C durchgeführt wird.

11. Verfahren zur Herstellung von zusammengesetzten Elementen, die eine aktive Schicht aus Kobaltfluorid aufweisen, dadurch gekennzeichnet, daß es darin besteht, ein Kobaltfluoridpulver mit einer spezifischen Oberfläche von 10 bis 120 $m^2/g$ mit dem Verfahren gemäß Anspruch 2 herzustellen, das derart erhaltene Pulver auf einem makroporösen Träger aufzubringen, den überzogenen Träger zusammenzudrücken und ihn einer Wärmebehandlung auszusetzen, die im Vakuum oder in einer inerten Atmosphäre bei einer Temperatur unterhalb von 600 °C durchgeführt wird.

12. Verfahren nach Anspruch 10 oder 11, dadurch gekennzeichnet, daß der makroporöse Träger von einem hohlen Rohr aus Aluminiumoxyd oder frittiertem Nickel gebildet ist.

13. Verfahren nach einem der Ansprüche 10 bis 12, dadurch gekennzeichnet, daß man das Bleifluoridpulver oder das Kobaltfluoridpulver auf den Träger aufbringt, indem man eine Suspension des Pulvers in einem organischen Lösungsmittel durch den Träger hindurchfiltert.